# FASCICULE DE BREVET EUROPEEN

(11) **EP 3 294 624 B1**
(45) Date de publication et mention de la délivrance du brevet: **31.03.2021**
(21) Numéro de dépôt: 16724685.9
(22) Date de dépôt: 04.05.2016
(51) Int. Cl.: B64C 29/00, B64C 39/12, B64C 3/54

(54) **AVION CONVERTIBLE A ROTORS DÉCOUVRABLES**
KONVERTIERBARES FLUGZEUG MIT EXPONIERBAREN ROTOREN
CONVERTIBLE AIRPLANE WITH EXPOSABLE ROTORS

(30) Priorité: 11.05.2015 FR 1500973
(43) Date de publication de la demande: 21.03.2018
(73) Titulaire: Deslypper, Christian Roger Rene, 95490 Vaureal (FR)
(72) Inventeur: Deslypper, Christian Roger Rene, 95490 Vaureal (FR)
(86) Numéro de dépôt international: PCT/FR2016/000084
(87) Numéro de publication internationale: WO 2016/181044

(56) Documents cités:
- WO-A2-2006/113877
- DE-A1-102006 019 300
- US-A1- 2007 018 035

## Description

### DOMAINE TECHNIQUE

L'objet de la présente invention est un avion de type convertible, capable de voler comme un avion grâce à une voilure fixe et de décoller /atterrir verticalement mais également de se maintenir et de manœuvrer en stationnaire comme un hélicoptère, grâce à un ensemble de rotors

### TECHNIQUE ANTERIEURE

De nombreux concepts d'avion convertibles ont déjà été réalisés ou brevetés, qui visent essentiellement à obtenir la vitesse et l'économie d'utilisation d'un avion, simultanément avec la capacité de pouvoir atterrir et décoller verticalement, qui fait de l'hélicoptère, en dépit de ses défauts (vitesse plafonnée, coût d'utilisation, autonomie), le seul moyen disponible aujourd'hui pour certaines applications :
- transport civil de passagers ou de matériel vers et depuis des sites ne permettant pas un atterrissage ou décollage horizontal, comme par exemple les plateformes pétrolières, les immeubles situés en zone urbaine ou les zones confinées,
- évacuation sanitaire, directement à partir du lieu d'un accident,
- activités de SAR (Search And Rescue), qui nécessitent de pouvoir rejoindre aussi rapidement que possible un site où des personnes sont à secourir, de se maintenir en vol stationnaire au-dessus de ces personnes afin de pouvoir les embarquer dans la machine, puis de les amener rapidement jusqu'à un hôpital,
- missions militaires habituellement assurées par des hélicoptères de manœuvre (transport tactique de troupes ou de matériel vers des sites ne disposant pas de piste d'atterrissage).

Dans la catégorie « avion convertible pour le transport de 10 à 30 passagers ou de matériel pour une charge équivalente », on trouve parmi les machines ayant dépassé le stade de prototype le Boeing-Bell V-22 Osprey (militaire), l'AgustaWestland AW609 (civil/gouvernemental) et le Kamov Ka-22 (ce dernier réalisé seulement en 3 exemplaires et abandonné en 1964). Ces machines sont toutes, comme les hélicoptères équivalents, d'une grande complexité et sont donc coûteuses à l'achat comme en maintenance, elles sont également coûteuses à l'utilisation car elles ne peuvent décoller et atterrir que verticalement, ce qui se traduit par une consommation élevée de carburant pendant les phases de décollage et atterrissage. Par ailleurs, leur pilotage lors des transitions entre le vol vertical et le vol horizontal est délicat et leurs performances perfectibles (rotors difficiles à optimiser entre les deux types de vol pour le V-22 et l'AW609, traînée du rotor en vol horizontal pour le Ka-22). En dernier lieu, ces machines ne sont pas vraiment capables de manœuvrer en vol stationnaire et surtout présentent l'inconvénient d'avoir l'échappement de leurs turbines dirigé vers le bas, ce qui interdit dans la pratique leur usage pour les missions de SAR, voire de poser sur les plateformes pétrolières, les navires ou les immeubles.

La publication US 2007/018035 A1, Saiz Manuel et al, 25 Janvier 2007 décrit un système de sustentation et de propulsion pour avion à décollage et atterrissage vertical. Ce système utilise des turbines à gaz ou des turbopropulseurs placés près du centre de gravité et pouvant basculer autour d'un arbre transversal pour assurer la propulsion et/ou la sustentation, des hélices de stabilisation (entraînées par des moteurs électriques) sur les extrémités des ailes, du nez, du stabilisateur horizontal et du gouvernail vertical stabilisent l'avion lors du décollage vertical, les conduits de ces hélices de stabilisation s'ouvrant automatiquement lors du mouvement vertical et se fermant lors du mouvement horizontal.

La publication WO 2006/113877 Lugg Richard / Youngren Harold, 26 Octobre 2006 décrit un avion à décollage et atterrissage vertical comprenant des ailes, des stabilisateurs horizontaux et des canards et propulsé par un réacteur. Pour permettre le décollage/atterrissage vertical, cet avion comporte un ensemble de soufflantes entraînées par des moteurs électriques (eux-mêmes alimentés par un générateur électrique entraîné par le réacteur), ainsi qu'une tuyère orientable pouvant dévier le flux du réacteur vers le bas. Les soufflantes, installées à l'emplanture des ailes et dans les canards, sont couvertes pendant le vol horizontal par un système de persiennes orientables et autres mécanismes de portes.

### EXPOSE DE L'INVENTION

L'invention concerne un appareil tel que défini dans la revendication indépendante annexée. D'autres caractéristiques de l'appareil sont définies dans les revendications dépendantes annexées. Un avion convertible selon la présente invention se distinguant par sa capacité de voler et manœuvrer en vol stationnaire est donc dénommé « hoverplane » (du terme anglais « hover » signifiant voler en stationnaire).

Pour les applications précédemment citées, l'hoverplane se montre supérieur à l'hélicoptère, car son principe lui confère, en plus des capacités de décollage/atterrissage vertical et vol/manœuvrabilité en stationnaire d'un hélicoptère, les avantages spécifiques d'un avion :
- pour les passagers : vitesse, confort (moins de bruit et de vibrations), sécurité (plusieurs hélicoptères ont été perdus suite au bris du rotor ou à une défaillance de la transmission entraînant une perte de portance plus ou moins brutale et donc la chute de l'hélicoptère ou le poser d'urgence, ce type d'accident étant beaucoup plus improbable sur un avion),
- pour l'exploitant : économie (coûts d'utilisation plus faibles grâce à la possibilité d'atterrir ou décoller horizontalement et coûts de maintenance réduits du fait d'une complexité moindre), sécurité.
L'avantage majeur de l'hoverplane objet de l'invention par rapport à l'hélicoptère est cependant sa simplicité technique, qui se traduit pour l'avionneur par des coûts de développement/mise au point et de construction réduits, autorisant pour l'exploitant des coûts d'acquisition et de maintenance significativement inférieurs.

### DESCRIPTION SOMMAIRE DES DESSINS

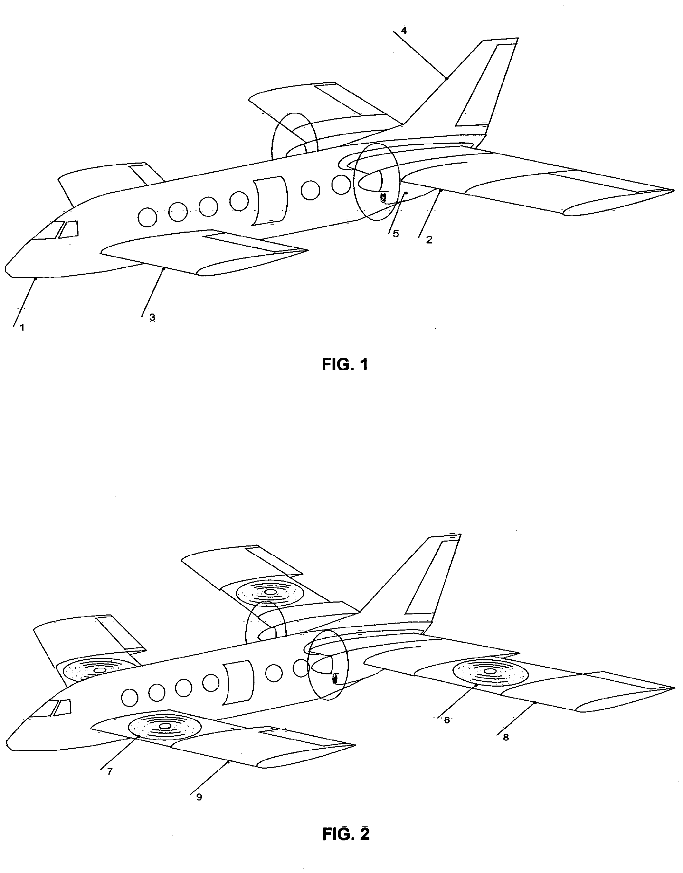

Les dessins annexés illustrent l'invention. La Figure 1 représente l'hoverplane en configuration « avion », la Figure 2 l'hoverplane en configuration « hélicoptère » c'est-à-dire lors des phases de décollage/atterrissage vertical et vol stationnaire.

Comme illustré par la Figure 1, l'hoverplane se présente sous la forme d'un avion « classique », avec un fuselage (1) dans lequel prennent place les passagers (ou le matériel à transporter) ainsi que l'équipage, une aile fixe (2), un plan stabilisateur horizontal (3) et une dérive verticale (4). Les caractéristiques de l'aile (profil, allongement, calage, ..) et du plan stabilisateur horizontal sont optimisées pour le vol en mode avion, de façon à offrir les meilleures performances de vitesse et/ou de consommation et de permettre le décollage et/ou l'atterrissage horizontal. La propulsion est assurée par un plusieurs réacteurs ou un ou plusieurs turbopropulseurs selon la gamme de vitesse recherchée. Dans l'exemple illustré par la Figure 1, c'est une configuration bi-turbopropulseur (5) qui est représentée.

A l'intérieur de l'aile et du plan stabilisateur (ou éventuellement du fuselage, dans des exemples ne faisant pas partie de l'invention revendiquée) est installé un ensemble de rotors (6 et 7), dont l'axe de rotation est vertical et soit fixe, soit capable d'être légèrement incliné d'avant en arrière et latéralement. Ces rotors sont mus soit par des moteurs indépendants des moteurs de propulsion (préférentiellement alors avec un moteur par rotor), soit au moyen d'un système de transmission, à partir des moteurs de propulsion.

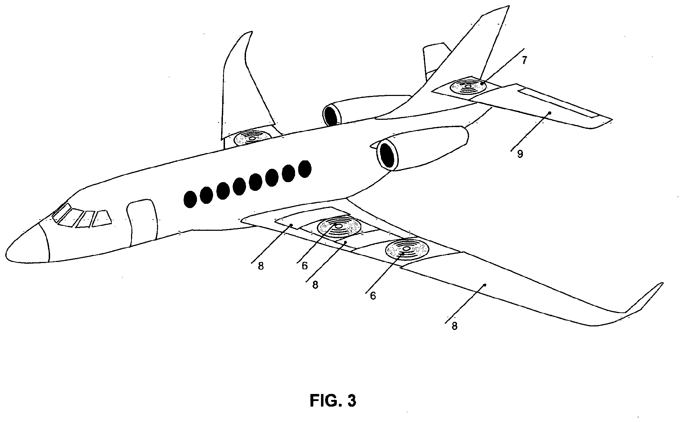

Dans l'exemple illustré par la Figure 2, c'est une configuration à 4 rotors qui est représentée, mais dans des exemples non revendiqués une configuration à 3 rotors est également possible, le 3^{ème} rotor étant alors installé dans le fuselage comme sur le F-35. De même, des configurations mettant en oeuvre 6 rotors (comme sur la Figure 3), ou 8 rotors (ou encore 5 rotors dans des exemples non revendiqués), sont également possibles, elles permettent l'utilisation de rotors de plus faible diamètre, au bénéfice des caractéristiques de l'aile qui peut alors présenter un allongement et un effilement plus élevés.

Pour le vol et le décollage/atterrissage en mode avion, la configuration de l'hoverplane est celle de la Figure 1 : les rotors sont complètement enfermés à l'intérieur de l'aile et du plan stabilisateur (ou du fuselage dans des exemples non revendiqués), ce qui permet de n'induire aucune traînée parasite.

Comme illustré par les Figures 2 ou 3, pour le décollage/atterrissage vertical et le vol en stationnaire, des panneaux coulissants (8 et 9) sur et en bout d'aile et de stabilisateur horizontal permettent de découvrir les rotors, qui assurent alors la sustentation de l'hoverplane. Ces panneaux constituent la section marginale de l'aile ou du plan stabilisateur et sont configurés pour coulisser au-delà de la position de l'extrémité de l'aile ou du plan stabilisateur telle qu'elle est en mode « avion ».

La taille et le mode de rétraction de ces panneaux permet pour l'aile ou le plan stabilisateur de présenter au moins la même surface portante avec les panneaux ouverts qu'avec les panneaux fermés. Cette caractéristique rend la transition entre le vol horizontal et le vol vertical ou stationnaire plus facile.

Afin de pouvoir être entièrement contenus à l'intérieur de l'aile et du plan stabilisateur (ou encore dans le fuselage dans les configurations à 3 ou 5 rotors non revendiquées), les rotors sont de diamètre sensiblement plus réduit que sur un hélicoptère ou un convertible de type V-22 ou AW609. Ils tournent donc plus vite, ce qui génère une stabilité élevée dans le plan horizontal. De même, les rotors placés de chaque côté de l'hoverplane sont contrarotatifs, ce qui génère une stabilité élevée en lacet. L'hoverplane présente ainsi une stabilité « intrinsèque » importante, permettant d'obtenir par des moyens simples (car n'ayant à agir qu'au deuxième ordre) une stabilisation parfaite du vol en stationnaire ou lors du décollage/atterrissage vertical.

Dans l'exemple illustré par la Figure 2, les hélices de propulsion peuvent tourner lors du vol stationnaire ou du décollage/atterrissage vertical de façon à augmenter la stabilité intrinsèque de l'hoverplane. Cependant, elles ne génèrent alors aucune traction, leur pas étant ramené à zéro, sauf lorsqu'un déplacement en avant ou en arrière ou une orientation en lacet sont désirés.

Le contrôle du vol stationnaire s'effectue en agissant de manière identique ou différentielle sur la vitesse (uniquement dans le cas des rotors mus par des moteurs indépendants) ou sur le pas des différents rotors :
- une action identique sur chacun des rotors fait monter ou descendre l'hoverplane,
- une action différentielle sur les rotors de côtés différents déplace l'hoverplane latéralement,
- une action différentielle sur les rotors avant et arrière (dans le cas d'une configuration à au moins 3 rotors) ou une action identique sur le pas des hélices de propulsion déplace l'hoverplane en avant ou en arrière,
- une action différentielle sur la vitesse des différents rotors (uniquement dans le cas des rotors mus par des moteurs indépendants) ou une action différentielle sur le pas des hélices de propulsion oriente l'hoverplane en lacet.

Dans les configurations où l'axe des rotors est inclinable, le déplacement en avant ou en arrière ou latéralement ainsi que l'orientation en lacet sont obtenus en agissant sur l'inclinaison des rotors.
L'hoverplane en vol stationnaire est ainsi à la fois stable, manoeuvrant et facile à piloter, ces qualités, particulièrement appréciées lors de missions de type SAR, étant en outre obtenues par des moyens simples, peu coûteux à développer et à produire. La conception de l'hoverplane assure également une grande stabilité dans les phases de transition du vol vertical au vol horizontal et vice-versa, la géométrie générale de l'appareil et la disposition des rotors faisant que le centre de poussée de la voilure et celui de l'ensemble des rotors sont pratiquement confondus, ce qui évite l'apparition de tout moment cabreur ou piqueur qu'il faudrait autrement compenser soit manuellement par le pilote, soit automatiquement par un système dont le coût de développement ou de mise au point pourrait être important.
Lors de la transition du vol stationnaire au vol horizontal, le pilote a uniquement à augmenter la poussée des moteurs de propulsion. Le système de commandes de vol gère la sustentation assurée par les rotors à mesure que la vitesse relative de l'hoverplane, et donc la portance assurée par l'aile, augmente. Une fois atteinte une vitesse relative suffisante, la puissance motrice sur les rotors est progressivement réduite et les panneaux coulissants d'aile (et éventuellement de stabilisateur et/ou de fuselage) refermés. Le système de rotors ne génère alors plus aucune traînée parasite et l'hoverplane redevient un pur avion, avec les avantages spécifiques de l'avion par rapport à l'hélicoptère pour ce qui concerne le vol : vitesse, confort, économie, sécurité.

La transition du vol horizontal au vol stationnaire s'effectue de manière symétrique : le pilote décélère en diminuant ou en inversant la poussée des moteurs de propulsion jusqu'à annuler sa vitesse par rapport au sol. Le système de commandes de vol gère la sustentation assurée par les rotors à mesure que la vitesse relative de l'hoverplane, et donc la portance assurée par l'aile, diminue : une fois atteinte une vitesse relative suffisamment basse, les panneaux coulissants d'aile (et éventuellement de stabilisateur et/ou du fuselage) s'ouvrent et la puissance motrice est appliquée sur les rotors, de façon à générer une force de sustentation devenant progressivement égale au poids de l'appareil.

Le concept et la technologie de l'hoverplane lui permettent ainsi de se distinguer des autres avions convertibles de même catégorie par :
- ses performances en vitesse et économie d'exploitation proches de celles d'un avion (sa charge utile étant cependant légèrement réduite par rapport à un avion du fait de la masse du système de rotors et de la motorisation de ceux-ci), du fait d'une meilleure optimisation du système de propulsion, celui-ci n'ayant pas à assurer la fonction sustentation,
- ses capacités de vol stationnaire, identiques à celles d'un hélicoptère doté d'un pilote automatique capable du mode SAR avec contrôle du déplacement en stationnaire par le treuilliste, ces capacités ainsi que ses capacités de décollage/atterrissage vertical n'étant pas obérées par un quelconque problème créé par l'échappement des turbomoteurs, celui-ci n'étant pas dirigé vers le bas lors du décollage/atterrissage ou du vol stationnaire,
- la possibilité de décoller et atterrir comme un avion, pour une plus grande économie et une sécurité accrue.

### MEILLEURE MANIERE DE REALISER L'INVENTION

L'avantage primordial de l'hoverplane par rapport aux avions convertibles ou hélicoptères de même catégorie est la simplicité considérablement plus grande du système permettant le vol vertical et le stationnaire, ce qui se traduit par des coûts d'acquisition et de maintenance significativement inférieurs.

Une réalisation possible de l'hoverplane pourrait en effet faire appel, pour la fonction sustentation, à 4 rotors disposés comme dans l'exemple illustré par la Figure 2, ces 4 rotors étant entraînés par des moteurs électriques à fort couple et haut rendement, très légers et d'un volume très réduit en regard de leur puissance et d'un coût considérablement plus faible qu'un turbomoteur, avec une maintenance extrêmement réduite. Les 4 rotors pourraient alors être à axe et pas fixes, ce qui simplifie et fiabilise grandement la réalisation (ces rotors pourraient alors être réalisés par moulage de fibre de carbone, avec un prix considérablement plus faible qu'un rotor d'hélicoptère ou une soufflante de turboréacteur), la manœuvrabilité et la stabilité en vol stationnaire étant obtenue uniquement par variation différentielle de la vitesse de rotation de chaque moteur sous le contrôle d'un système de stabilisation très simple, analogue aux systèmes utilisés sur les « drones » grand public destinés à réaliser des prises de vue aériennes. Basés sur un ensemble de 3 gyromètres + 3 accéléromètres, ces systèmes sont capables d'assurer une stabilisation très efficace en attitude, voire aussi en position s'ils incorporent également un GPS. Les moteurs électriques entraînant les rotors de sustentation pourraient être alimentés par un accumulateur électrique de type Lithium-Ion ou autre technologie à forte densité d'énergie massique, dont la capacité (donc la masse et le volume) peut être limitée en fonction de la durée prévue de la phase de la mission où les rotors seront utilisés, avec la possibilité de recharger cet accumulateur à partir d'un générateur électrique entraîné par les moteurs de propulsion.

## Revendications

1. Appareil dénommé hoverplane, capable de voler comme un avion et de décoller /atterrir verticalement mais également de se maintenir et de manœuvrer en stationnaire comme un hélicoptère, comportant un fuselage (1), une aile fixe (2), un plan stabilisateur horizontal (3) et un ensemble de 4, 6 ou 8 rotors découvrables (6 et 7) installés dans l'aile (2) et dans le plan stabilisateur horizontal (3) et assurant la sustentation pour les phases de décollage/atterrissage vertical et vol en stationnaire, dans lequel pour le vol et le décollage/atterrissage en mode avion, lesdits rotors sont complètement enfermés à l'intérieur de l'aile et du plan stabilisateur, ce qui permet de n'induire aucune traînée parasite,
et dans lequel, pour le décollage/atterrissage vertical et le vol en stationnaire, des panneaux coulissants (8 et 9) sur ou en bout d'aile et sur ou en bout de stabilisateur horizontal permettent de découvrir les rotors, qui assurent alors la sustentation de l'appareil,
l'hoverplane comportant de plus un système de contrôle du vol stationnaire ou vertical agissant de manière identique ou différentielle sur la vitesse ou sur le pas desdits rotors de sustentation,
l'hoverplane étant **caractérisé en ce que** lesdits panneaux constituent la section marginale de l'aile et du plan stabilisateur horizontal et sont configurés pour coulisser au-delà de la position de l'extrémité de l'aile ou du plan stabilisateur telle qu'elle est en mode avion, la taille et le mode de rétraction de ces panneaux permettant pour l'aile et le plan stabilisateur horizontal de présenter au moins la même surface portante avec les panneaux ouverts qu'avec les panneaux fermés.

2. Appareil dénommé hoverplane selon la revendication 1, **caractérisé en ce que** les rotors de sustentation sont de diamètre réduit afin d'être complètement contenus à l'intérieur de l'aile et du plan stabilisateur, l'axe de rotation de ces rotors étant vertical et soit fixe, soit légèrement inclinable d'arrière en avant et latéralement, lesdits rotors étant mus soit par des moteurs indépendants des moteurs de propulsion, préférentiellement alors avec un moteur par rotor, soit au moyen d'un système de transmission, à partir des moteurs de propulsion

3. Appareil dénommé hoverplane selon la revendication 2, **caractérisé en ce que** ses rotors tournent à vitesse élevée, et **en ce que** les rotors (6 et 7) placés de chaque côté du fuselage sont contra-rotatifs, assurant ainsi à l'appareil en vol stationnaire une stabilité intrinsèque importante.

4. Appareil dénommé hoverplane selon la revendication 3, **caractérisé en ce qu'**il comporte un système de contrôle de la stabilité et des déplacements en vol stationnaire ou vertical comprenant un ensemble de 3 gyromètres et 3 accéléromètres et éventuellement un GPS et agissant de manière identique ou différentielle uniquement sur la vitesse des différents rotors de sustentation dans le cas de rotors mus par des moteurs indépendants ou sur le pas des différents rotors de sustentation dans le cas de rotors mus par les mêmes moteurs pour déplacer l'hoverplane en avant ou en arrière ou latéralement, l'orientation en lacet étant réalisée également en agissant sur la vitesse des différents rotors dans le cas de rotors de sustentation mus par des moteurs indépendants ou par une action différentielle sur le pas des hélices de propulsion dans le cas de rotors de sustentation mus par les mêmes moteurs.

5. Appareil dénommé hoverplane selon la revendication 3, **caractérisé en ce que**, dans les configurations où l'axe des rotors est inclinable, le déplacement de l'appareil en avant ou en arrière ou latéralement ainsi que l'orientation en lacet sont obtenus en agissant sur l'inclinaison des rotors.

6. Appareil dénommé hoverplane selon la revendication 1, **caractérisé en ce qu'**il comporte un système de commandes de vol gérant automatiquement la sustentation générée par les rotors et l'ouverture/fermeture des panneaux coulissants en fonction de la vitesse relative de l'appareil dans les phases de transition du vol vertical ou stationnaire au vol horizontal et vice-versa.

7. Appareil dénommé hoverplane selon la revendication 1, **caractérisé en ce que** les rotors de sustentation sont entraînés par des moteurs électriques, lesdits rotors étant alors à axe et pas fixes et lesdits moteurs électriques entraînant les rotors de sustentation sont alimentés par un accumulateur électrique de type Lithium-Ion ou autre technologie à forte densité d'énergie massique, cet accumulateur étant configuré pour être rechargé à partir d'un générateur électrique entraîné par des moteurs de propulsion de l'hoverplane.

## Patentansprüche

1. Luftfahrzeug, Hoverplane genannt, das in der Lage ist, wie ein Flugzeug zu fliegen und senkrecht zu starten / landen, aber auch wie ein Hubschrauber im Schwebeflug zu bleiben und zu manövrieren, mit einem Rumpf (1), einem festen Flügel (2), einem horizontalen Stabilisator (3) und einem Satz von 4, 6 oder 8 exponierbaren Rotoren (6 und 7), die im Inneren des Flügels (2) und des horizontalen Stabilisators (3) installiert sind und den Auftrieb für das senkrechte Starten/Landen und den Schwebeflug liefern, wobei für den Flug und das Starten/Landen im Flugzeugmodus die besagten Rotoren vollständig im Inneren des Flügels und des horizontalen Stabilisators eingeschlossen sind, was erlaubt, kein parasitäres aerodynamisches Widerstand zu induzieren und wobei für das senkrechte Starten/Landen und den Schwebeflug, Schiebepaneele (8 und 9) auf oder an der Spitze des Flügels und auf oder an der Spitze des horizontalen Stabilisators es ermöglichen, die Rotoren freizulegen, die dann das Flugzeug anheben, wobei das Hoverplane außerdem zur Steuerung des stationären oder vertikalen Fluges ein System umfasst, das auf die gleiche oder auf eine differentielle Weise auf die Geschwindigkeit oder auf die Steigung der Hubrotoren einwirkt, wobei das Hoverplane **dadurch gekennzeichnet ist, daß** die verschiebbaren Paneele den Endabschnitt des Flügels und des horizontalen Stabilisators bilden und so konfiguriert sind, daß sie jenseits der Stelle der Spitze des Flügels oder des horizontalen Stabilisators, wie sie im Flugzeugmodus ist, schieben können, wobei die Größe und der Einfahrmodus der Paneele es ermöglichen, daß der Flügel und der horizontale Stabilisator bei geöffneten Paneele mindestens die gleiche Tragfläche haben wie bei geschlossenen Paneele.

2. Luftfahrzeug Hoverplane genannt nach Anspruch 1, **dadurch gekennzeichnet, daß** die Hubrotoren einen kleinen Durchmesser haben, um vollständig im Inneren des Flügels und des horizontalen Stabilisators eingeschlossen zu sein, wobei die Drehachse dieser Rotoren vertikal und entweder fest ist oder leicht nach vorn/hinten und seitlich gekippt werden kann, wobei die Rotoren entweder durch von den Antriebsmotoren unabhängige Motoren angetrieben werden, in diesem Fall vorzugsweise mit einem Motor für jeden Rotor, oder von den Antriebsmotoren über ein Übertragungssystem.

3. Luftfahrzeug Hoverplane genannt nach Anspruch 2, **dadurch gekennzeichnet, daß** seine Rotoren mit einer hohen Geschwindigkeit laufen und daß die Rotoren (6 und 7) auf jeder Seite des Rumpfes gegenläufig sind, wodurch das Luftfahrzeug im stationären Flug eine hohe Eigenstabilität erhält.

4. Luftfahrzeug Hoverplane genannt nach Anspruch 3, **dadurch gekennzeichnet, daß** es ein System zur Steuerung der Stabilität und der Bewegungen im stationären oder vertikalen Flug umfasst, wobei dieses System einen Satz von 3 Gyrometern und 3 Beschleunigungsmessern und eventuell ein GPS umfasst und in gleicher oder differenzierter Weise nur auf die Geschwindigkeit der verschiedenen Hubrotoren im Falle von Rotoren, die von unabhängigen Motoren angetrieben werden, oder auf die Steigung der verschiedenen Hubrotoren im Falle von Rotoren, die von denselben Motoren angetrieben werden, wirkt, um das Hoverplane vorwärts oder rückwärts oder seitlich zu bewegen, wobei die Ausrichtung in Gier auch durch Einwirkung auf die Geschwindigkeit der verschiedenen Rotoren im Falle von durch unabhängige Motoren angetriebenen Hubrotoren oder durch eine differentielle Einwirkung auf die Steigung der Antriebsluftschrauben im Falle von durch dieselben Motoren angetriebenen Hubrotoren erreicht wird.

5. Luftfahrzeug Hoverplane genannt nach Anspruch 3, **dadurch gekennzeichnet, daß** in den Konfigurationen, in denen die Achse der Rotoren gekippt werden kann, die Bewegung vorwärts, rückwärts oder seitlich sowie die Ausrichtung in Gier durch Einwirkung auf die Kippung der Rotoren erhalten wird.

6. Luftfahrzeug Hoverplane genannt nach Anspruch 1, **dadurch gekennzeichnet, daß** es ein Flugsteuerungssystem umfasst, das automatisch den von den Rotoren erzeugten Auftrieb und das Öffnen/Schließen der Schiebepaneele in Abhängigkeit von der Fluggeschwindigkeit des Luftfahrzeugs in den Übergangsphasen vom vertikalen oder stationären Flug zum horizontalen Flug und umgekehrt steuert.

7. Luftfahrzeug Hoverplane genannt nach Anspruch 1, **dadurch gekennzeichnet, daß** die Hubrotoren von Elektromotoren angetrieben werden, wobei die besagten Rotoren dann eine feste Achse und eine feste Steigung haben und die besagten Elektromotoren, die die Hubrotoren antreiben, von einem elektrischen Akkumulator des Typs Lithium-Ion oder einer anderen Technologie mit hoher Energiedichte mit Energie versorgt werden, wobei dieser Akkumulator so konfiguriert ist, daß er mittels eines elektrischen Generators geladen wird, der von den Antriebsmotoren des Hoverplane angetrieben wird.

## Claims

1. An aircraft called hoverplane, capable of flying like an airplane and of taking-off/landing vertically but also to hover and manoeuvre like an helicopter, comprising a fuselage (1), a fixed wing (2), an horizontal stabilizer (3) and a system of 4, 6 or 8 exposable rotors (6 and 7), installed inside the wing (2) and the horizontal stabilizer (3) and providing lift for the vertical take-off/landing and stationary flight phases, in which for flight and take-off/landing in airplane mode the said rotors are completely enclosed inside the wing and the horizontal stabilizer, which permits to avoid inducing any parasitic aerodynamic drag, and in which for vertical take-off/landing and stationary flight, sliding panels (8 and 9) on or at the tip of the wing and on or at the tip of the horizontal stabilizer allow to uncover the rotors, which then lift the aircraft, the hoverplane comprising in addition, for controlling the stationary or vertical flight, a system acting in the same or in a differential manner on the speed or on the pitch of the said lifting rotors, the hoverplane being **characterized in that** the sliding panels constitute the tip section of the wing and of the horizontal stabilizer and are configured for sliding beyond the position of the tip of the wing or of the horizontal stabilizer as it is in airplane mode, the size and the retraction mode of said panels permitting for the wing and the horizontal stabilizer to have at least the same lifting surface with the panels open than with the panels closed.

2. Aircraft called hoverplane of claim 1, **characterized in that** the lifting rotors are of small diameter in order to be completely enclosed inside the wing and the horizontal stabilizer, the rotation axis of these rotors being vertical and either fixed or able of being slightly tilted rearwards/backwards and laterally, said rotors being powered either by motors independent of the propulsion engines, in this case preferably with one motor for each rotor, or from the propulsion engines by means of a transmission system.

3. Aircraft called hoverplane of claim 2, **characterized in that** its rotors spin at a high speed and **in that** the rotors (6 and 7) on each side of the fuselage are contra-rotating, hence ensuring the aircraft in stationary flight a high intrinsic stability.

4. Aircraft called hoverplane of claim 3, **characterized in that** it includes a system for controlling stability and movements in stationary or vertical flight, this system comprising a set of 3 gyrometers and 3 accelerometers and possibly a GPS and acting in the same or in a differential manner only on the speed of the different lifting rotors in the case of rotors powered by independent motors or on the pitch of the different lifting rotors in the case of lifting rotors powered by the same motors to move the hoverplane forward or backwards or laterally, the orientation in yaw being also achieved in acting on the speed of the different rotors in the case of lifting rotors powered by independent motors or by a differential action on the pitch of the propulsion airscrews in the case of lifting rotors powered by the same motors.

5. Aircraft called hoverplane of claim 3, **characterized in that** in the configurations where the axis of the rotors can be tilted, the movement forward, backwards or laterally, as well as the orientation in yaw, are obtained by acting on the tilting of the rotors.

6. Aircraft called hoverplane of claim 1, **characterized in that** it comprises a flight controls system automatically managing the lift generated by the rotors and the opening/closing of the sliding panels according to the airspeed of the aircraft in the transition phases from vertical or stationary flight to horizontal flight and vice-versa.

7. Aircraft called hoverplane of claim 1, **characterized in that** the lifting rotors are driven by electric motors, the said rotors being then fixed-pitch and fixed-axle and the said electric motors driving the lifting rotors being supplied with power by an electrical accumulator of Lithium-Ion type or any other high energy density technology, this accumulator being configured to be charged by means of an electrical generator driven by the hoverplane propulsion engines.
